# EUROPÄISCHE PATENTANMELDUNG

(11) **EP 4 610 540 A1**
(43) Veröffentlichungstag der Anmeldung: **03.09.2025**
(21) Anmeldenummer: 25159012.1
(22) Anmeldetag: 20.02.2025
(51) Int. Cl.: F16P 3/12, B67C 3/00

(54) **SCHUTZEINRICHTUNG FÜR EINE MASCHINE**

(30) Priorität: 27.02.2024 DE 102024105495
(71) Anmelder: Krones AG, 93073 Neutraubling (DE)
(72) Erfinder: NIEMANN, Antonia, 93073 Neutraubling (DE); HOF, Reimund, 93073 Neutraubling (DE); KRAUSE, Joerg, 93073 Neutraubling (DE); MAUL, Michael, 93073 Neutraubling (DE)
(74) Vertreter: Grünecker Patent- und Rechtsanwälte PartG mbB

(57) **Zusammenfassung**

Schutzeinrichtung (101) für eine Maschine (100), beispielsweise eine Behälterbehandlungsmaschine (100), die Schutzeinrichtung umfassend ein in vertikaler Richtung bewegliches Schutzelement (111) und eine mit dem Schutzelement verbundene Pneumatikeinheit (112), wobei die Pneumatikeinheit ein mit Druck beaufschlagbares Pneumatikelement umfasst, das ausgestaltet ist, die Gewichtskraft des Schutzelements während einer Bewegung entlang der vertikalen Richtung im Wesentlichen zu kompensieren.

## Beschreibung

Die vorliegende Erfindung betrifft eine Schutzeinrichtung für eine Maschine, beispielsweise eine Behälterbehandlungsmaschine, gemäß dem Anspruch 1 sowie eine Behälterbehandlungsmaschine zum Behandeln von Behältern gemäß Anspruch 10.

### Stand der Technik

Schutzeinrichtungen für Maschinen sind aus dem Stand der Technik bekannt. Diese werden üblicherweise verwendet, um einen Bereich der Maschine von dem Eingriff eines Bedieners abzuschirmen. Hiermit können beispielsweise bewegliche Komponenten der Maschine, die bei Eingriff durch einen Bediener ein erhebliches Verletzungsrisiko darstellen könnten, vor dem Eingriff eines Bedieners geschützt werden. Damit wird die Betriebssicherheit erhöht.

Eine solche Schutzeinrichtung ist beispielsweise aus der WO 2010/099822 A1 bekannt. Hier wird zumindest ein Schutzelement über geeignete Führungsmittel, die mit dem Grundrahmen der Behälterbehandlungsmaschine verbunden sind, entlang eines vorgegebenen Bewegungspfads bewegt. Zusätzliche Hilfsmittel zum Erleichtern der Bewegung des Schutzelements sind ebenfalls vorgesehen.

Abhängig von der Größe des zu bewegenden Schutzelements (insbesondere dessen Gewicht) ist es für einen Bediener jedoch schwierig, das Schutzelement beispielsweise zwischen der geschlossenen Position (auch Schutzposition genannt) und einer offenen Position, in der beispielsweise eine bewegliche Komponente der Maschine von außen für einen Bediener zugänglich sein kann, zu bewegen. Damit geht üblicherweise ein unerwünschtes Verletzungsrisiko einher oder die Bedienbarkeit der Schutzeinrichtung wird negativ beeinträchtigt.

### Aufgabe

Ausgehend vom bekannten Stand der Technik besteht die zu lösende technische Aufgabe somit darin, eine Schutzeinrichtung für eine Maschine, insbesondere eine Behälterbehandlungsmaschine anzugeben, die von einem Bediener möglichst unabhängig von seiner physischen Konstitution betätigt werden kann und gleichzeitig die Betriebssicherheit gewährleistet.

### Lösung

Die Aufgabe wird erfindungsgemäß durch die Schutzeinrichtung für eine Maschine, beispielsweise eine Behälterbehandlungsmaschine, gemäß Anspruch 1 sowie die Behälterbehandlungsmaschine zum Behandeln von Behältern gemäß Anspruch 10 gelöst. Vorteilhafte Weiterbildungen der Erfindung sind in den Unteransprüchen erfasst.

Die erfindungsgemäße Schutzeinrichtung für eine Maschine, beispielsweise eine Behälterbehandlungsmaschine, umfasst ein in vertikaler Richtung bewegliches Schutzelement und eine mit dem Schutzelement verbundene Pneumatikeinheit, wobei die Pneumatikeinheit ein mit Druck beaufschlagbares Pneumatikelement umfasst, das ausgestaltet ist, die Gewichtskraft des Schutzelements während einer Bewegung entlang der vertikalen Richtung im Wesentlichen zu kompensieren.

In diesem Sinne ist das mit Druck beaufschlagbare Pneumatikelement mit dem Schutzelement derart verbunden, dass die auf das Schutzelement wirkende Gewichtskraft durch den im Pneumatikelement herrschenden Druck ausgeglichen bzw. kompensiert wird. Der Druck im Pneumatikelement wirkt also beispielsweise bei einem nicht bewegten Schutzelement der Gewichtskraft des Schutzelements entgegen, so dass das Schutzelement in seiner Position verharrt. Wird das Schutzelement entlang der Richtung der Schwerkraft (also nach unten) bewegt, erhöht sich der Druck in dem Pneumatikelement und zum Ausgleichen der Gewichtskraft wird dieser verringert, um keinen der Bewegung des Schutzelements entgegenwirkenden über die Kompensation der Gewichtskraft hinausgehenden Druck aufzubauen. Wird das Schutzelement nach oben (entgegen der Richtung der Schwerkraft) bewegt, so verringert sich der Druck in dem Pneumatikelement, und um eine Kompensation der Gewichtskraft zu erreichen, wird der Druck in dem Pneumatikelement erhöht.

Unter dem "im Wesentlichen" Kompensieren der Gewichtskraft des Schutzelements ist zu verstehen, dass das Pneumatikelement stets mit einem solchen Druck beaufschlagt wird, dass bevorzugt ein solcher Druck im Pneumatikelement herrscht, dass dieser die Gewichtskraft des Schutzelements exakt ausgleicht bzw. kompensiert. Mit dem Begriff des im Wesentlichen Kompensierens der Gewichtskraft kann jedoch auch umfasst sein, dass die Gewichtskraft insbesondere in Bewegung des Schutzelements zu wenigstens 85 %, bevorzugt zu wenigstens 90 %, besonders bevorzugt zu wenigstens 95 % ausgeglichen wird. Ebenfalls umfasst sind Überkompensationen der Gewichtskraft von bis zu 5 % oder bis zu 10% oder bis zu 15 %.

Ein exaktes Kompensieren der Gewichtskraft des Schutzelements während einer Bewegung entlang der vertikalen Richtung ermöglicht die einfachste Handhabung durch einen Bediener, kann jedoch mit einem größeren steuerungstechnischen Aufwand verbunden sein, da ein sehr genaues Einstellen des in dem Pneumatikelement herrschenden Drucks, der der Gewichtskraft des Schutzelements während der Bewegung entgegenwirkt, erfolgen muss. Wird eine Abweichung von der vollständigen Kompensation der Gewichtskraft des Schutzelements während der Bewegung zugelassen, bewirkt dies zwar, dass ein Bediener eine gewisse Kraft aufbringen muss, um das Schutzelement mit oder entgegen der Richtung der Schwerkraft zu bewegen. Jedoch sinkt der steuerungstechnische Aufwand, was die Komplexität der Schutzeinrichtung verringern kann.

Mit dieser Schutzeinrichtung kann der Schutz des Bedieners zu jeder Zeit gewährleistet sein. Gleichzeitig wird das Bewegen des Schutzelements vereinfacht, insbesondere von der physischen Konstitution des Bedieners entkoppelt, was eine einfachere Handhabung ermöglicht.

Es kann vorgesehen sein, dass die Pneumatikeinheit eine Druckluftzufuhr umfasst, wobei die Druckluftzufuhr ausgebildet ist, das Pneumatikelement mit einem Gasdruck zu beaufschlagen, der bei einer Aufwärtsbewegung des Schutzelements die Gewichtskraft des Schutzelements im Wesentlichen kompensiert. Das Gas kann, muss jedoch nicht zwingend Luft sein.

Dabei kann vorgesehen sein, dass die Druckluftzufuhr ein Einlassventil umfasst, über das bei einer Aufwärtsbewegung des Schutzelements der in dem Pneumatikelement herrschende Druck so erhöht wird, dass die Gewichtskraft des Schutzelements im Wesentlichen kompensiert wird.

Hiermit kann bevorzugt während der gesamten Bewegung des Schutzelements in einer Richtung entgegen der Schwerkraft (Aufwärtsbewegung) die Gewichtskraft des Schutzelements zuverlässig kompensiert werden.

In einer Ausführungsform ist vorgesehen, dass die Pneumatikeinheit ein Ablassventil umfasst, über das bei einem Absenken des Schutzelements in dem Pneumatikelement vorhandener Überdruck abgelassen werden kann, sodass beim Absenken des Schutzelements die Gewichtskraft des Schutzelements im Wesentlichen kompensiert wird und/oder keine der Abwärtsbewegung entgegenwirkende Kraft aufgrund des in dem Pneumatikelement herrschenden Drucks bewirkt wirkt.

Da bei einer Abwärtsbewegung der im Pneumatikelement herrschende Druck, der der Gewichtskraft des Schutzelements gegenwirkt, steigt, wird mit diesem Ablassventil sichergestellt, dass auch beim Abwärtsbewegen des Schutzelements entgegen der Richtung der Schwerkraft keine oder höchstens wenig zusätzliche Kraft durch den Bediener erforderlich ist, da die Gewichtskraft des Schutzelements während der gesamten Abwärtsbewegung im Wesentlichen kompensiert wird ohne eine der Abwärtsbewegung entgegenwirkende Kraft aufzubauen.

Es kann vorgesehen sein, dass das Einlassventil und/oder das Ablassventil ein Druckregelventil ist oder ein Druckregelventil umfasst. Hiermit ist ein genauer Ausgleich der Gewichtskraft während der gesamten Bewegung möglich.

Die Pneumatikeinheit kann ein Sperrventil in einer Zuleitung des Pneumatikelements umfassen, wobei das Sperrventil ausgestaltet sein kann, bei einem Druckabfall in der Zuleitung einen Druck im Pneumatikelement konstant zu halten.

Durch diese Ausführungsform wird sichergestellt, dass das Pneumatikelement nicht unbeabsichtigt, beispielsweise durch einen Defekt, nicht mehr kompensierend für die Gewichtskraft des Schutzelements wirken kann, was bei einem Defekt während der Bewegung des Schutzelements zu einem Verletzungsrisiko des Bedieners führen würde. Die Betriebssicherheit wird hiermit erhöht.

Es kann vorgesehen sein, dass das Pneumatikelement in einem Verbindungspunkt mit dem Schutzelement verbunden ist und wobei der Verbindungspunkt in einem Bereich entlang einer horizontalen Ausdehnung L des Schutzelements angeordnet ist, wobei der Bereich zwischen 0,25L und 0,75L oder zwischen 0,4L und 0,6L angeordnet ist.

Der Bereich zwischen 0,25L und 0,75L bzw. 0,4L und 0,6L ist insbesondere so angeordnet, dass er gesehen von einer Begrenzung des Schutzelements links oder rechts der horizontalen Ausdehnung gemessen wird. Dies bedingt eine im Wesentlichen mittige Anordnung des Pneumatikelements relativ zu dem Schutzelement. Dadurch werden etwaige Drehmoment, die auf das Schutzelement aus/oder das Pneumatikelement einwirken können, reduziert, was eine zuverlässigere Kompensation der Gewichtskraft des Schutzelements ermöglicht.

In einer Ausführungsform ist vorgesehen, dass das Schutzelement ein Verriegelungselement umfasst, mit dem das Schutzelement in einer Schutzposition verriegelt werden kann. Die Schutzposition ist die Position des Schutzelements, in der das Schutzelement ein Eingreifen eines Bedieners in eine bewegliche Komponente einer Maschine verhindern kann.

Mit diesem Verriegelungselement wird sichergestellt, dass sich das Schutzelement nicht unbeabsichtigt aus der Schutzposition herausbewegen kann. Hiermit wird die Betriebssicherheit weiter erhöht.

Die Schutzeinrichtung kann ein feststehendes Element umfassen und das Schutzelement kann relativ zu dem feststehenden Element beweglich angeordnet sein.

Das feststehende Element kann beispielsweise ein Teil der Schutzeinrichtung sein, durch den ein Bediener nicht in den von der Schutzeinrichtung abgetrennten Bereich hineingreifen soll, so dass dieser permanent durch die Schutzeinrichtung verschlossen bleibt. Hiermit kann die Betriebssicherheit weiter erhöht werden.

Die Schutzeinrichtung kann wenigstens ein Schutzelement, vorzugsweise wenigstens zwei Schutzelemente umfassen, und wobei mit jedem Schutzelement eine unabhängige Pneumatkeinheit verbunden sein kann.

Mit dieser Ausführungsform kann die Bewegung mehrerer Schutzelemente unabhängig voneinander und mit geringem Krafteinsatz des Bedieners gewährleistet werden.

Erfindungsgemäß ist weiterhin eine Behälterbehandlungsmaschine zum Behandeln von Behältern, wie beispielsweise Flaschen, vorgesehen, die Behälterbehandlungsmaschine umfassend wenigstens eine bewegliche Komponente und eine Schutzeinrichtung gemäß einer der vorangegangenen Ausführungsformen, wobei die Schutzeinrichtung so angeordnet ist, dass in einer Schutzposition des Schutzelements das bewegliche Element innerhalb eines von der Schutzeinrichtung zumindest teilweise begrenzten Bereichs angeordnet ist.

Insbesondere kann in der Schutzposition des Schutzelements ein Eingreifen eines Bedieners in den begrenzten Bereich vermieden oder verhindert werden, indem das Schutzelement als physische Barriere fungiert, durch die ein Bediener nicht von außerhalb der Schutzeinrichtung in den begrenzten Bereich eingreifen kann.

Das Verletzungsrisiko eines Bedieners wird hierdurch reduziert und gleichzeitig eine einfache Bedienbarkeit gewährleistet.

Es kann vorgesehen sein, dass die Behälterbehandlungsmaschine ein Behandlungsaggregat umfasst, das die wenigstens eine bewegliche Komponente umfasst und wobei in der Schutzposition des Schutzelements das Behandlungsaggregat sich zumindest teilweise durch die Schutzeinrichtung hindurch erstreckt.

Unter einem Behandlungsaggregat kann insbesondere eine Vorrichtung verstanden werden, die eine Behandlung an einem Behälter ausführen kann. Unter einem Behandlungsaggregat kann beispielsweise aber nicht ausschließlich ein Etikettieraggregat verstanden werden, das Etiketten auf an ihm vorbeibewegte Behälter aufbringen kann. Mit dieser Ausführungsform wird der Schutz des Bedieners vor einem versehentlichen Eingreifen in eine bewegliche Komponente reduziert, aber gleichzeitig der Platzbedarf der Schutzeinrichtung geringgehalten, da beispielsweise Teile des Behandlungsaggregats, die keine beweglichen Komponenten umfassen, aus der Schutzeinrichtung hinausragen können.

Es kann vorgesehen sein, dass die bewegliche Komponente ein Karussell, ein Drehstern, Transferzylinder oder eine Palettenwelle umfasst. Diese Komponenten bewegen sich im Betrieb üblicherweise mit hohen Geschwindigkeiten, so dass ein relevantes Verletzungsrisiko für einen Bediener bei einem unbeabsichtigten Eingriff im Betrieb bestehen würde. Mit dieser Ausführungsform wird das Verletzungsrisiko zuverlässig minimiert.

Die Schutzeinrichtung kann mit einem Rahmen der Behälterbehandlungsmaschine fest verbunden sein.

Der Rahmen kann beispielsweise ein feststehender Teil der Behälterbehandlungsmaschine sein. Durch Verbinden der Schutzeinrichtung mit dem Rahmen wird diese stabilisiert, was ihre Schutzwirkung verbessern kann.

### Kurze Beschreibung der Figuren

- Fig. 1: zeigt eine Behälterbehandlungsmaschine gemäß einer Ausführungsform
- Fig. 2: zeigt ein Schutzelement zusammen mit einer Pneumatikeinheit gemäß einer Ausführungsform

### Ausführliche Beschreibung

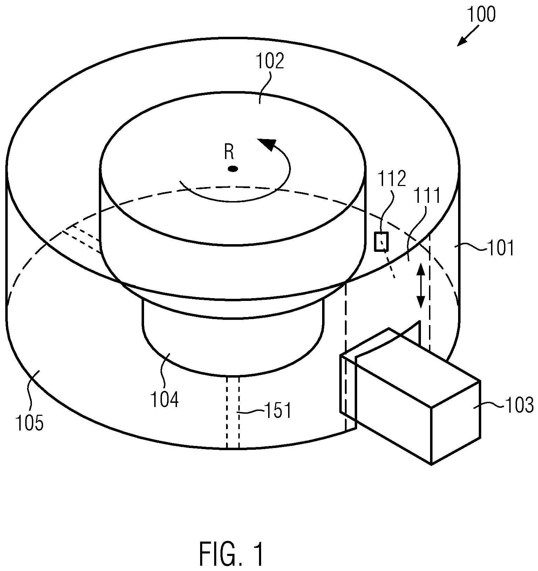

Fig. 1 zeigt eine Behälterbehandlungsmaschine 100 gemäß einer Ausführungsform der Erfindung. Die Art der Behälterbehandlungsmaschine ist erfindungsgemäß nicht beschränkt und die Behälterbehandlungsmaschine kann eine Ausstattungsmaschine beispielsweise eine Etikettiermaschine oder eine Direktdruckmaschine zum Ausstatten/Dekorieren von Behältern sein oder diese umfassen oder als eine Maschine ausgebildet sein, die Behälter beispielsweise aus Vorformlingen herstellen kann (etwa ein Blasformmaschine oder Formfüllmaschine). Auch eine Ausgestaltung der Behälterbehandlungsmaschine 100 als Inspektionseinrichtung oder sonstige Maschine, die in irgendeiner Form mit Behältern interagieren kann, ist denkbar.

Überdies ist die Erfindung nicht auf die Anwendung im Rahmen einer Behälterbehandlungsmaschine beschränkt, sondern kann auch allgemein beispielsweise auf industrielle Maschinen angewandt werden.

Erfindungsgemäß ist eine Schutzeinrichtung 101 vorgesehen, die insbesondere vorgesehen sein kann, eine bewegliche Komponente der Behälterbehandlungsmaschine 100 vor einem Eingriff durch einen Bediener zumindest teilweise zu schützen. Dazu kann die Schutzeinrichtung 101 die bewegliche Komponente beispielsweise vollständig umschließen oder alle beweglichen Komponenten der Behälterbehandlungsmaschine einschließen.

Als bewegliche Komponente kann hier beispielsweise ein Behandlungskarussell 102 der Behälterbehandlungsmaschine 100 verstanden werden. Das Behandlungskarussell kann beispielsweise entlang seiner Peripherie eine Reihe von Behälterbehandlungsstationen und/oder Behälteraufnahmen (nicht gezeigt) umfassen, in denen Behälter aufgenommen und optional behandelt werden können. Das Behandlungskarussell 102 kann beispielsweise um die Rotationsachse R drehbar gelagert sein. Alternativ oder zusätzlich kann auch eine bewegliche Komponente als Teil eines Behandlungsaggregats 103 (beispielsweise eines Etikettieraggregats) vorgesehen sein. Bei der beweglichen Komponente kann es sich beispielsweise um eine Palettenwelle zum Aufnehmen von Etiketten aus einem Vorrat handeln. Auch diese bewegliche Komponente kann innerhalb der Schutzeinrichtung 101 bzw. einem von der Schutzeinrichtung zumindest teilweise begrenzten Bereich angeordnet sein. Alternativ oder zusätzlich können die beweglichen Komponenten auch einen oder mehrere Drehsterne oder ähnliche Einrichtungen umfassen. Die Komponenten sind erfindungsgemäß nicht beschränkt und jede irgendwie bewegliche Komponente, die aufgrund ihrer Bewegung insbesondere ein Verletzungsrisiko für einen Bediener mit sich bringen kann, ist von der Erfindung erfasst.

Erfindungsgemäß umfasst die Schutzeinrichtung 101 zumindest ein entlang einer vertikalen Richtung beweglich angeordnetes Schutzelement 111. Das Schutzelement 111 kann beispielsweise aus Plexiglas bestehen oder Plexiglas umfassen und somit eine Schutzwirkung gegenüber einem Eingriff durch einen Bediener entfalten, indem das Schutzelement als physische Barriere dient.

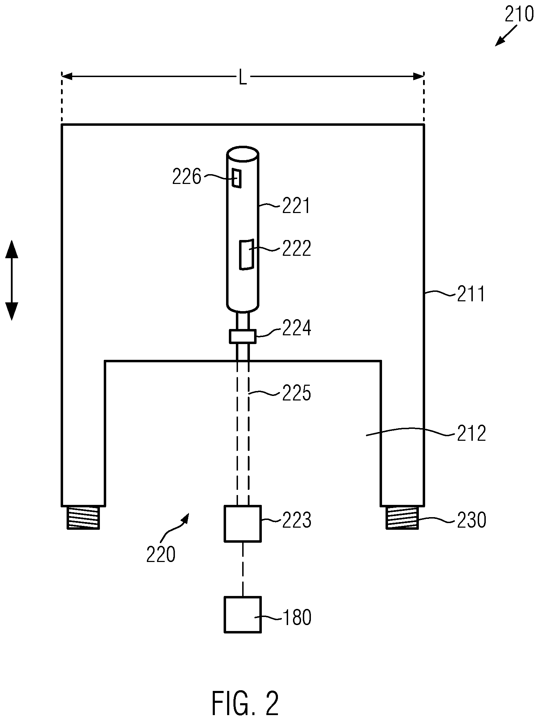

Das Schutzelement 111 ist erfindungsgemäß mit einer Pneumatikeinheit 112 verbunden. Diese erlaubt es erfindungsgemäß, während der Bewegung des Schutzelements 111 entgegen oder mit der Richtung der Schwerkraft (also zumindest in vertikaler Richtung) die Gewichtskraft des Schutzelements während dieser Bewegung im Wesentlichen zu kompensieren. Dazu umfasst die Pneumatikeinheit 112 ein mit dem Schutzelement verbundenes und mit Druck beaufschlagbares Pneumatikelement, wie noch in Bezug auf Fig. 2 beschrieben wird.

Die Schutzeinrichtung 101 kann in einer Ausführungsform auch mehrere (wenigstens zwei) in vertikaler Richtung bewegliche Schutzelemente umfassen, so dass beispielsweise der Zugang zu einer oder mehreren beweglichen Komponenten der Behälterbehandlungsmaschine auch von mehreren Positionen aus möglich ist. In einer Ausführungsform ist vorgesehen, dass jedes dieser beweglichen Schutzelemente mit einer diesem Schutzelement zugeordneten Pneumatikeinheit derart verbunden ist, dass das mit Druck beaufschlagbare Pneumatikelement die Gewichtskraft des Schutzelements während seiner Bewegung entlang der vertikalen Richtung im Wesentlichen kompensieren kann. Die Pneumatikeinheiten sind dabei bevorzugt unabhängig voneinander, so dass jedes Schutzelement unabhängig von der Position der übrigen Schutzelemente bewegt werden kann.

Bei der Bewegung des Schutzelements in vertikaler Richtung handelt es sich bevorzugt um eine Bewegung zwischen einer Schutzposition (die einer Position des Schutzelements entspricht, in der es die angedachte Schutzwirkung entfalten kann) und einer offenen Position oder Freigabeposition (in der das Schutzelement einen Eingriff des Bedieners an die bewegliche Komponente erlaubt).

Durch Kompensieren der Gewichtskraft des Schutzelements während seiner Bewegung mit Hilfe der Pneumatikeinheit bzw. insbesondere des Pneumatikelements wird erreicht, dass ein Bediener unabhängig von seiner physischen Konstitution das Schutzelement in die Schutzposition und/oder in die offene Position verbringen kann, so dass die Handhabung bzw. Interaktion mit der Behälterbehandlungsmaschine erleichtert wird. Gleichzeitig kann durch die Schutzeinrichtung ein zuverlässiger Schutz des Bedieners gewährleistet sein.

In der hier dargestellten Ausführungsform umfasst die Schutzeinrichtung 101 neben dem zumindest einen beweglichen Schutzelement 111 auch ein feststehenden Element 105, wobei die Schutzeinrichtung 101 in der hier gezeigten Ausführungsform zumindest das Behandlungskarussell 102 im Wesentlichen vollständig umgibt. Dieses feststehende Element 105 kann beispielsweise über geeignete Verbindungselemente 151 (beispielsweise Verstrebungen) mit einem feststehenden Teil der Behälterbehandlungsmaschine (hier beispielsweise ein Standfuß oder Rahmen 104 des Behandlungskarussells) fest verbunden sein. Alternativ oder zusätzlich kann auch eine Verbindung mit einem feststehenden Teil der Behälterbehandlungsmaschine oberhalb des Karussells erfolgen oder an seitlichen Rahmen oder Stützen der Behälterbehandlungsmaschine realisiert werden. Hierdurch wird zum einen sichergestellt, dass die Schutzeinrichtung nicht versehentlich umfallen kann, was zu Beschädigungen der Behälterbehandlungsmaschine führen könnte. Zum anderen wird sichergestellt, dass das feststehende Element 105 und auch das Schutzelement 111 möglichst stets den notwendigen Abstand zu den beweglichen Komponenten der Behälterbehandlungsmaschine einhalten.

Es kann vorgesehen sein, dass das bewegliche Schutzelement 111 mit dem feststehenden Element 105 derart verbunden ist, dass das Schutzelement 111 relativ zu dem feststehenden Element bewegt werden kann, mit diesem aber beispielsweise über Führungselemente verbunden ist. Hierdurch kann der Bewegungsspielraum des Schutzelements 111 beispielsweise in horizontaler Richtung beschränkt werden, was sicherstellt, dass selbst bei einer Bewegung des beweglichen Schutzelements 111 durch den Bediener keine Beschädigungen der Behälterbehandlungsmaschine auftreten können. Die Verbindungselemente können beispielsweise Paare von korrespondierenden Schienen oder Gleitelementen sein, so dass das Schutzelement 111 beispielsweise in einer Führungsschiene des feststehenden Elements 105 entlang bewegt werden kann.

Fig. 2 zeigt eine Ausführungsform eines beweglichen Schutzelements 210 entsprechend des beweglichen Schutzelements 111 aus der Fig. 1. Dieses bewegliche Schutzelement 210 ist mit jeder der im Zusammenhang mit der Fig. 1 beschriebenen Ausführungsformen in Kombination gedacht.

Das in der Fig. 2 dargestellte bewegliche Schutzelement 210 kann als eine im Wesentlichen durchgehende Plexiglasscheibe 211 oder ähnliches durchgehendes Element ausgeführt sein, das sich insbesondere in horizontaler Richtung (in Richtung L) und in vertikaler Richtung über eine Fläche erstreckt. Diese Fläche kann, muss jedoch nicht regelmäßig sein und kann beispielsweise ein Rechteck oder ein Zylindermantelausschnitt sein. Optional kann das Schutzelement jedoch auch eine oder mehrere Öffnungen oder Einbuchtungen 212 umfassen, die beispielsweise so geformt sein können, dass in einer Schutzposition des Schutzelements 210 eine bewegliche Komponente der Behälterbehandlungsmaschine vollständig vor einem Eingriff durch einen Bediener geschützt ist. Wird das Schutzelement aus der Schutzposition in die offene Position verfahren, kann der Bediener beispielsweise durch die Öffnung 212 auch an die bewegliche Komponente gelangen. Die Öffnung 212 kann so geformt sein, dass sie an die Form eines Bestandteils der Behälterbehandlungsmaschine, das sich durch die Schutzeinrichtung zumindest teilweise hindurch erstreckt (etwa ein Behandlungsaggregat, wie ein Etikettieraggregat), angepasst ist. Hierdurch wird das Risiko von unbeabsichtigten Eingriffen eines Bedieners in dem von der Schutzeinrichtung abgeschirmten Bereich reduziert.

In einer Ausführungsform kann das Schutzelement 210 weiterhin ein Verriegelungselement 230 umfassen, mit dem das Schutzelement in einer Schutzposition verriegelt werden kann. Das Verriegelungselement 230 kann beispielsweise Haken oder ähnliche Verriegelungsmechanismen umfassen, die mit korrespondierenden Elementen der Schutzeinrichtung und/oder Behälterbehandlungsmaschine in Eingriff gebracht werden können, wenn das Schutzelement die Schutzposition einnimmt. Es kann vorgesehen sein, dass ohne ein Lösen des Verriegelungselements eine Bewegung des Schutzelements 210 aus der Schutzposition heraus nicht möglich ist.

In der in Fig. 2 dargestellten Ausführungsform umfasst die Pneumatikeinheit 220 ein Pneumatikelement 221, das als mit Druck beaufschlagbarer Pneumatikzylinder ausgestaltet ist. Dazu kann eine Seite des Pneumatikzylinders 221 mit einer Druckluftzufuhr 223 beispielsweise über eine Druckluftleitung (Zuleitung) 225 verbunden sein, so dass der Pneumatikzylinder von einer Seite mit Druckluft beaufschlagt werden kann.

Optional kann vorgesehen sein, dass die Druckluftzufuhr 223 ein Einlassventil umfasst, über das bei einer Aufwärtsbewegung des Schutzelements 210 der in dem Pneumatikelement 221 herrschende Druck so erhöht wird, dass die Gewichtskraft des Schutzelements 210 im Wesentlichen kompensiert wird.

Weiterhin kann optional die Pneumatikeinheit ein Ablassventil 226 umfassen, durch das ein vorhandener Überdruck im Pneumatikelement, insbesondere in dem Pneumatikzylinder abgelassen werden kann. Der Pneumatikzylinder, insbesondere eine bewegliche Komponente des Pneumatikzylinders (beispielsweise die Zylinderstange) ist in einem Verbindungspunkt 222 mit dem beweglichen Schutzelement 210 verbunden, so dass sich der bewegliche Teil der Pneumatikeinheit mit dem beweglichen Schutzelement mitbewegen kann. Der Verbindungspunkt 222 ist bevorzugt so angeordnet, dass er etwa mittig (in horizontaler Richtung) am beweglichen Schutzelement angeordnet ist. Die auf die Pneumatikeinheit durch das Schutzelement wirkenden Kräfte werden hierdurch bevorzugt in horizontaler Richtung ausgeglichen, sodass keine oder nur geringe Drehmomente auf den Verbindungspunkt 222 und/oder die bewegliche Komponente des Pneumatikelements wirken. Bevorzugt kann der Verbindungspunkt 222 in einem Bereich zwischen 0,25L und 0,75L gesehen von der linken oder der rechten hier in Fig. 2 gezeigten Begrenzung des Schutzelements 210 angeordnet sein. Besonders bevorzugt erstreckt sich dieser Bereich zwischen 0,4 und 0,6L gesehen von einer der Begrenzungen aus, wobei L die Ausdehnung des Schutzelements in horizontaler Richtung ist. In vertikaler Richtung kann die Verbindung der Pneumatikeinheit mit dem Schutzelement beliebig erfolgen. Insbesondere kann die Pneumatikeinheit auch vollständig oberhalb oder unterhalb des beweglichen Schutzelements 210 angeordnet sein und lediglich über geeignete Verbindungselemente (beispielsweise eine Verlängerung der Zylinderstange) in dem Verbindungspunkt 222 mit dem Schutzelement verbunden sein.

Erfindungsgemäß ist vorgesehen, dass die Pneumatikeinheit 221 (etwa der Pneumatikzylinder) so über die Druckluftzufuhr 223 mit Druck beaufschlagbar ist, dass bei einer Aufwärtsbewegung des beweglichen Schutzelements 210 (also entgegen der Richtung der Schwerkraft) und/oder bei einer Abwärtsbewegung des beweglichen Schutzelements 210 der in der Pneumatikeinheit wirkende Druck der Gewichtskraft des Schutzelements entgegenwirkt, insbesondere diese im Wesentlichen kompensiert.

Bei einer Aufwärtsbewegung umfasst dies, dass die Pneumatikeinheit 221 über die Druckluftzufuhr bevorzugt mit Druckluft (oder einem anderen unter Druck stehenden Gas) beaufschlagt wird, so dass der Druck innerhalb der Pneumatikeinheit konstant gehalten und die Gewichtskraft des Schutzelements kompensiert wird. Die Druckluftzufuhr kann beispielsweise durch ein Einlassventil erfolgen. Wird das Schutzelement hingegen nach unten bewegt, womit auch eine Mitbewegung zumindest eines Teils der Pneumatikeinheit entgegen dem in ihr herrschenden Druck erfolgt, wird der Druck beispielsweise durch Ablassen von Gas oder Luft aus dem Ablassventil 226 reduziert, so dass er während der Bewegung des beweglichen Schutzelements bevorzugt im Wesentlichen die Gewichtskraft des beweglichen Schutzelements kompensiert.

Ist die Pneumatikeinheit 221 als einfach wirkender Pneumatikzylinder ausgestaltet, kann vorgesehen sein, dass auf ein separates Einlassventil und/oder ein separates Ablassventil 226 verzichtet wird.

Das Einlassventil und/oder das Ablassventil 226 kann in einer Ausführungsform insbesondere als Druckregelventil ausgeführt sein. Mit einem Druckregelventil kann besonders zuverlässig der im Pneumatikzylinder herrschende Druck bei einer Abwärtsbewegung des beweglichen Schutzelements 210 angepasst werden, so dass die Gewichtskraft des beweglichen Schutzelements 210 auch bei ruckartigen Bewegungen möglichst vollständig kompensiert werden kann.

Es kann vorgesehen sein, dass die Druckluftzufuhr 223 (beispielsweise das Einlassventil) und das Ablassventil 226 durch einen Bediener gesteuert werden können. So kann beispielsweise ein Drucktaster zum Bedienen durch einen Bediener vorgesehen sein, wobei standardmäßig das Einlassventil geöffnet und das Ablassventil 226 geschlossen ist, sodass ein hoher Druck an dem Pneumatikelement 221 anliegt, und wobei bei Betätigen (und Halten) des Drucktasters das Einlassventil geschlossen und das Ablassventil 226 geöffnet ist, sodass ein geringer Druck an dem Pneumatikelement 221 anliegt.

Es kann ebenfalls vorgesehen sein, dass eine Steuereinheit 180 (beispielsweise ein Computer mit zugeordnetem Speicher und darauf gespeicherten Programminstruktionen zum Steuern einer oder mehrerer Funktionen der Behälterbehandlungsmaschine der Fig. 1) die Druckluftzufuhr 223 abhängig von einem in dem Pneumatikzylinder 221 herrschenden Druck so steuert, dass dieser stets in Kontakt ist. Die Steuereinheit 180 kann auch das Ablassventil 226 steuern, so dass durch die Steuerung dieser beiden Komponenten die Gewichtskraft des Schutzelements 210 zu jeder Zeit möglichst durch den in dem Pneumatikelement herrschenden Druck kompensiert wird. Dabei kann vorgesehen sein, dass ein oder mehrere Drucksensoren beispielsweise in der Zuleitung 225 und/oder in der Pneumatikeinheit angeordnet sind, die den herrschenden Druck messen können und basierend auf gemessenen Druck kann die Steuereinheit dann entweder die Druckluftzufuhr oder das Ablassventil steuern, um den Druck in der Pneumatikeinheit zu erhöhen oder zu verringern.

Dabei kann vorgesehen sein, dass eine Steuerung der Druckluftzufuhr oder des Ablassventils abhängig von der Bewegungsrichtung des Schutzelements erfolgt. Wird das Schutzelement aufwärts (also entgegen der Schwerkraftrichtung) bewegt, muss der Druck in der Pneumatikeinheit erhöht werden, so dass vorgesehen sein kann, dass die Steuereinheit bei einer Aufwärtsbewegung des Schutzelements lediglich die Druckluftzufuhr steuert. Wird das Schutzelement abwärts (also in Richtung der Schwerkraft) bewegt, kann vorgesehen sein, dass die Steuereinheit 180 lediglich die Druckverringerung beispielsweise über das Ablassventil steuert. Übersteuerungen oder unerwünschte dynamische Effekte bei gleichzeitiger Steuerung des Ablassventils und der Druckluftzufuhr können hiermit vermieden werden.

In einer Ausführungsform kann ein Sperrventil 224 in der Zuleitung 225 angeordnet sein, das so ausgestaltet ist, dass es bei einem Druckabfall in der Zuleitung 225 einen Druck im Pneumatikelement konstant hält. Dazu kann das Sperrventil beispielsweise ein Abfließen von Druckluft aus dem Pneumatikelement 221 in Richtung der Zuleitung 225 unterbinden, wenn stromauf des Sperrventils 224 in der Zuleitung oder der Druckluftzufuhr plötzlich ein Druckabfall erfolgt. Hierdurch kann sichergestellt werden, dass in der gegebenen Position des Schutzelements 210 bei Druckabfall in der Zuleitung zumindest in dieser Position eine Kompensation der Gewichtskraft des Schutzelements 210 im Wesentlichen erfolgt. Zwar kann dann ein Abwärtsbewegen oder ein Aufwärtsbewegen des Schutzelements nur noch mit stark erhöhtem Krafteinsatz des Bedieners bewirkt oder durch den Bediener gar nicht bewirkt werden (sofern eine Bewegung entgegen dem wirkenden Druck überhaupt möglich ist), jedoch wird auch das Verletzungsrisiko eines Bedieners aufgrund beispielsweise einer unvermittelt einsetzenden vollständigen Wirkung der Gewichtskraft des Schutzelements reduziert bzw. vermieden.

## Patentansprüche

1. Schutzeinrichtung für eine Maschine, beispielsweise eine Behälterbehandlungsmaschine, die Schutzeinrichtung umfassend wenigstens ein in vertikaler Richtung bewegliches Schutzelement und eine mit dem Schutzelement verbundene Pneumatikeinheit, wobei die Pneumatikeinheit ein mit Druck beaufschlagbares Pneumatikelement umfasst, das ausgestaltet ist, die Gewichtskraft des Schutzelements während einer Bewegung entlang der vertikalen Richtung im Wesentlichen zu kompensieren.

2. Schutzeinrichtung nach Anspruch 1, wobei die Pneumatikeinheit eine Druckluftzufuhr umfasst, wobei die Druckluftzufuhr ausgebildet ist, das Pneumatikelement mit einem Gasdruck zu beaufschlagen, der bei einer Aufwärtsbewegung des Schutzelements die Gewichtskraft des Schutzelements im Wesentlichen kompensiert.

3. Schutzeinrichtung nach Anspruch 2, wobei die Druckluftzufuhr ein Einlassventil umfasst, über das bei einer Aufwärtsbewegung des Schutzelements der in dem Pneumatikelement herrschende Druck so erhöht wird, dass die Gewichtskraft des Schutzelements im Wesentlichen kompensiert wird.

4. Schutzeinrichtung nach einem der Ansprüche 1 bis 3, wobei die Pneumatikeinheit ein Ablassventil umfasst, über das bei einem Absenken des Schutzelements in dem Pneumatikelement vorhandener Überdruck abgelassen werden kann, sodass beim Absenken des Schutzelements die Gewichtskraft des Schutzelements im Wesentlichen kompensiert wird.

5. Schutzeinrichtung nach Anspruch 4, wobei das Ablassventil ein Druckregelventil ist oder ein Druckregelventil umfasst.

6. Schutzeinrichtung nach einem der Ansprüche 1 bis 5, wobei die Pneumatikeinheit ein Sperrventil in einer Zuleitung des Pneumatikelements umfasst, wobei das Sperrventil ausgestaltet ist, bei einem Druckabfall in der Zuleitung einen Druck im Pneumatikelement konstant zu halten.

7. Schutzeinrichtung nach einem der Ansprüche 1 bis 6, wobei das Pneumatikelement in einem Verbindungspunkt mit dem Schutzelement verbunden ist und wobei der Verbindungspunkt in einem Bereich entlang einer horizontalen Ausdehnung L des Schutzelements angeordnet ist, wobei der Bereich zwischen 0,25L und 0,75L oder zwischen 0,4L und 0,6L angeordnet ist.

8. Schutzeinrichtung nach einem der Ansprüche 1 bis 6, wobei das Schutzelement ein Verriegelungselement umfasst, mit dem das Schutzelement in einer Schutzposition verriegelt werden kann.

9. Schutzeinrichtung nach einem der Ansprüche 1 bis 8, wobei die Schutzeinrichtung ein feststehendes Element umfasst und wobei das Schutzelement relativ zu dem feststehenden Element beweglich angeordnet ist.

10. Schutzeinrichtung nach einem der Ansprüche 1 bis 9, wobei die Schutzeinrichtung wenigstens zwei Schutzelemente umfasst und wobei mit jedem Schutzelement eine unabhängige Pneumatikeinheit verbunden ist.

11. Behälterbehandlungsmaschine zum Behandeln von Behältern, wie beispielsweise Flaschen, die Behälterbehandlungsmaschine umfassend wenigstens eine bewegliche Komponente und eine Schutzeinrichtung gemäß einem der Ansprüche 1 bis 10, wobei die Schutzeinrichtung so angeordnet ist, dass in einer Schutzposition des Schutzelements das bewegliche Element innerhalb eines von der Schutzeinrichtung zumindest teilweise begrenzten Bereichs angeordnet ist.

12. Behälterbehandlungsmaschine nach Anspruch 11, wobei die Behälterbehandlungsmaschine ein Behandlungsaggregat umfasst, das die wenigstens eine bewegliche Komponente umfasst und wobei in der Schutzposition des Schutzelements das Behandlungsaggregat sich zumindest teilweise durch die Schutzeinrichtung hindurch erstreckt.

13. Behälterbehandlungsmaschine nach einem der Ansprüche 11 oder 12, wobei die bewegliche Komponente ein Karussell, ein Drehstern, Transferzylinder oder eine Palettenwelle umfasst.

14. Behälterbehandlungsmaschine nach einem der Ansprüche 11 bis 13, wobei die Schutzeinrichtung mit einem Rahmen der Behälterbehandlungsmaschine fest verbunden ist.
